# EUROPEAN PATENT SPECIFICATION

(11) **EP 1 684 093 B1**
(45) Date of publication and mention of the grant of the patent: **22.07.2009**
(21) Application number: 06000942.0
(22) Date of filing: 17.01.2006
(51) Int. Cl.: G01S 15/89

(54) **Ultrasound diagnostic apparatus**
Diagnostisches Ultraschallgerät
Appareil de diagnostic à ultrasons

(30) Priority: 19.01.2005 JP 2005011584
(43) Date of publication of application: 26.07.2006
(73) Proprietor: ALOKA CO., LTD., Mitaka-shi Tokyo 181-8622 (JP)
(72) Inventor: Ohshima, Nobuo, c/o Aloka Co., Ltd., Tokyo, 181-8622 (JP); Motokawa, Katsufumi, c/o Aloka Co., Ltd., Tokyo, 181-8622 (JP); Seki, Yoshinori, c/o Aloka Co., Ltd., Tokyo, 181-8622 (JP)
(74) Representative: Heim, Hans-Karl

(56) References cited:
- EP-A- 0 406 909
- EP-A- 1 548 462
- US-A- 4 993 417
- US-A- 5 081 996
- US-A1- 2005 004 462
- US-B1- 6 390 980
- PATENT ABSTRACTS OF JAPAN vol. 1997, no. 07, 31 July 1997 (1997-07-31) -& JP 09 066055 A (TOSHIBA CORP), 11 March 1997 (1997-03-11)

## Description

### BACKGROUND OF THE INVENTION

### Field of the Invention

The present invention relates to an ultrasound diagnostic apparatus, and more particularly to an ultrasound diagnostic apparatus for medical use, which performs transmission and reception of an ultrasound a plurality of times for each beam address for forming a Doppler image representing movement information of a moving object within a living body.

### Description of Related Art

When forming a two-dimensional Doppler image, an ultrasound diagnostic apparatus normally sequentially designates a beam address on a beam scan plane and performs transmission and reception of an ultrasound a plurality of times (eight to ten times, for example) for each beam address in a repetitive manner, thereby obtaining a plurality of (eight to ten, for example) receiving signals (beam data items) for each beam address. By performing a known autocorrelation operation for each depth within a living body based on these receiving signals, Doppler information (velocity information, for example) corresponding to one line can be obtained. Thus, based on a plurality of Doppler information items corresponding to a plurality of beam addresses, a two-dimensional Doppler image representing a blood flow or a moving tissue within a living body can be formed.

Japanese Patent Laid-Open Publication No. Sho 64-43237 (Reference 1), Japanese Patent Laid-Open Publication No. Hei 9-66055 (Reference 2), and Japanese Patent Laid-Open Publication No. 2004-329609 (Reference 3) describe a method in which the accuracy in measuring a low velocity component contained in the Doppler information can be increased without sacrificing the frame rate, the sampling number, the diagnostic depth, and so on. For example, Fig. 7 of the above-described Reference 1 (corresponding to Fig. 11 of its counterpart US patent, USP 4,993,417) shows a method in which the scan plane is divided into a plurality of blocks and a partial scan operation is repeated a plurality of times for each block. In a single partial scan operation, transmission and reception of an ultrasound is performed once for each one of beam addresses forming the block, starting from the top beam address through the end beam address. As a result of such a partial scan operation performed in a repetitive manner, a plurality of receiving signals can be obtained for each beam address within a single block. According to this method, with regard to each beam address in one block, the time interval between two adjacent receiving signals of the plurality of receiving signals obtained at each beam address is increased compared to when a plurality of receiving signals are obtained successively for one address by performing transmission and reception of an ultrasound with regard to each address a plurality of times in a successive manner. In other words, the above method allows preferable measurement of a low velocity component while maintaining the number of instances of ultrasound transmission and reception per frame.

With the method shown in Fig. 7 of the above Reference 1, however, there are instances wherein the top line of each block on a Doppler image is displayed unnaturally. This problem is also referred to in the above Reference 3 (and corresponding US 2005/0004462A1). In general, with regard to two beams which are successive in time, a transmission wave which has been transmitted when forming the preceding beam is also received in the receiving period regarding the following beam, resulting in a problem of residual echo. In the partial scan operation performed in a repetitive manner as described above, the residual echo is similarly generated between adjacent beams within a block. In addition, such residual echo is also generated across two partial scan operations (i.e. between the end beam address in the preceding scan operation and the top beam address in the following scan operation). Here, in the former case, generation of residual echo occurs between the beams which are spatially close to each other, whereas in the latter case, generation of residual echo occurs between the beams which are spatially apart from each other. Accordingly, on a Doppler image, the residual echo in the latter case appears more noticeably than the residual echo in the former case. In other words, with regard to a plurality of beams forming a block, the receiving conditions (receiving circumstances) for the top or first beam which is formed immediately after the turning point to the next partial scan operation differ from those for other beams, as a result of which discontinuous portions are generated on a Doppler image. Specifically, in a conventional Doppler image, there is a tendency that either the line corresponding to the top beam is skipped or that noticeable noise is displayed on that line. Such noise is generated by multiple reflected waves reflected from within the range of diagnostic depth and by echoes caused by strong reflectors outside the diagnostic depth range. Here, a change in the receiving conditions also occurs when a set of transmitting and receiving beams for forming a Doppler image is formed immediately after a set of transmitting and receiving beams for forming a luminance image has been formed.

Fig. 8 of Reference 1 (corresponding to Fig. 12 of USP. 4,993,417) and paragraphs [0014] and [0022] of Reference 2 describe a dummy beam. These references do not describe repetitive formation of dummy beams for each block. Rather, the dummy beams in these references correspond to a plurality of beams formed outside the effective frames, and, when a sequence in which the interval for outputting a set of receiving signals is fixed is adopted, these dummy beams merely supplement beams lacking at the start of the sequence or a time space. Further, none of the above references describes a beam sequence which assumes multi-direction simultaneous reception in which a plurality of receiving beams are formed simultaneously with respect to a single transmitting beam. Reference 3 describes a method in which the position on an image where the above-described discontinuous portion occurs is sequentially changed to thereby apparently reduce image deterioration caused by such discontinuity.

### SUMMARY OF THE INVENTION

The present invention advantageously increases the quality of a Doppler image.

Further, the present invention advantageously allows measurement of Doppler information in a low velocity region when multi-direction simultaneous reception is performed.

Also, the present invention advantageously eliminates or reduces a change in the image quality which occurs at the turning point of a partial scan operation when the partial scan operation is performed in a repetitive manner for each partial region.

Still further, the present invention advantageously eliminates or reduces a change in the image quality which occurs when a set of transmitting and receiving beams for Doppler image formation is formed following formation of a set of transmitting and receiving beams for luminance image formation.
(1) In accordance with one aspect, the present invention provides an ultrasound diagnostic apparatus comprising a transmitter/receiver section for forming a set of transmitting and receiving beams in a repetitive manner within a scan region in which Doppler information is measured, to obtain a plurality of receiving signals for each receiving beam address, a scanning control section for controlling repetitive formation of the set of transmitting and receiving beams, and a Doppler image forming section for forming a Doppler image representing movement information of a blood flow or a tissue existing within the scan region based on the plurality of receiving signals obtained for each receiving beam address, wherein the scanning control section sets a plurality of partial regions within the scan region, sequentially designates a partial region among the plurality of partial regions, and controls the transmitter/receiver section such that a partial scan operation is performed a plurality of times in a repetitive manner within the partial region which is designated, and in the repetitive partial scan operation to be performed a plurality of times, at a turning point from the i-th partial scan operation to the (i+1)th partial scan operation, a dummy transmitting beam is formed so as to reduce discontinuity of receiving conditions caused by the turning of the partial scan operation, after a last set of transmitting and receiving beams in the i-th partial scan operation is formed and before a first set of transmitting and receiving beams in the (i+1)th partial scan operation is formed.

With the above structure, the partial scan operation is performed a plurality of times for each partial region. In each partial scan operation, a set of transmitting and receiving beams is electronically scanned from one end to the other (i.e., in the direction of the ascending or descending beam numbers). In this case, in the course of turning of the partial scan operation shifting from the preceding partial scan operation (the i-th partial scan operation) to the following partial scan operation (the (i+1)th partial scan operation), a dummy transmitting beam (or a set of dummy transmitting and receiving beams including a dummy transmitting beam) is formed, prior to formation of a first set of transmitting and receiving beams in the following partial scan operation. More specifically, by purposely causing (receiving signals of) the first set of transmitting and receiving beams formed after the turning point to be affected by the dummy transmitting beam, the receiving conditions for the first set of transmitting and receiving beams can be matched to the receiving conditions for other sets of transmitting and receiving beams. When the receiving conditions can be unified among a plurality of sets of transmitting and receiving beams, a problem that the image quality for a specific line differs from that for other lines can be eliminated or reduced. With this structure, it is recognized that sufficiently great effects can be achieved in a simple manner. While it is preferable that the dummy transmitting beam be physically basically the same as normal transmitting beams, the dummy transmitting beam differs from the normal transmitting beams in that it is not actively formed for the purpose of obtaining information.

In addition to the dummy transmitting beam which is formed so as to eliminate discontinuity of the receiving conditions in the course of turning of the partial scan operation, a another dummy transmitting beam to be used for the purpose of eliminating discontinuity of the receiving conditions caused by other factors may also be formed. Further, dummy transmitting and receiving beams may be used for compensation in order to simplify the transmission and reception sequence among the partial scan operations in the partial regions, for example.

Preferably, the set of transmitting and receiving beams is composed of one transmitting beam and a plurality of receiving beams. By forming a plurality of receiving beams after formation of one transmitting beam, the frame rate can be increased. One dummy transmitting beam can affect a plurality of receiving beams. Of course, the advantage of the dummy transmitting beam can be similarly obtained when one receiving beam is formed with respect to one transmitting beam.

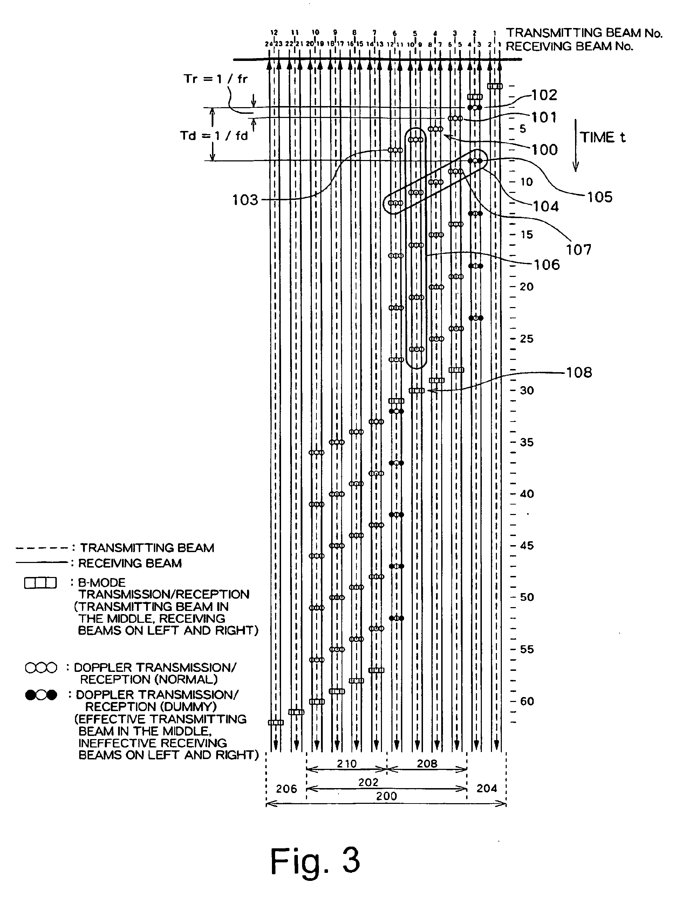

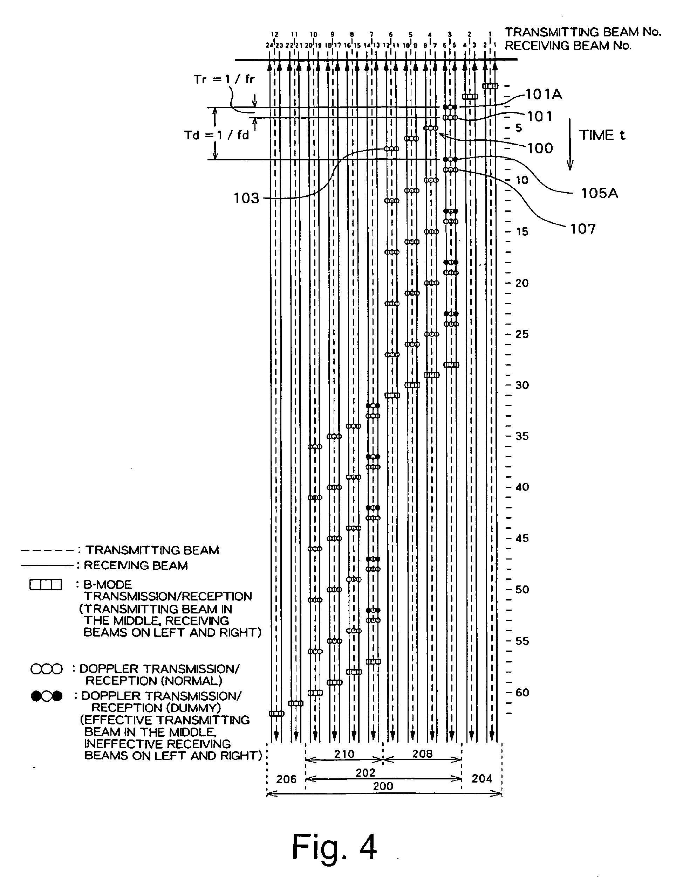

Preferably, the dummy transmitting beam is formed at a predetermined position based on a position of the first set of transmitting and receiving beams in the (i+1)th partial scan operation. Preferably, the predetermined position is adjacent to a position of a transmitting beam included in the first set of transmitting and receiving beams in the (i+1)th partial scan operation. With this structure, it is possible to accurately approximate the receiving conditions for the first set of transmitting and receiving beams to the receiving conditions for other sets of transmitting and receiving beams. An embodiment with such a configuration will be described below with reference to Fig. 3. Preferably, the predetermined position is the same as a position of a transmitting beam included in the first set of transmitting and receiving beams in the (i+1)th partial scan operation. With this structure, the advantageous effects similar to those obtained when forming the dummy transmitting beam at the adjacent position as described above can be expected. This embodiment will be described below with reference to Fig. 4.

According to the invention, when a dummy receiving signal corresponding to the dummy transmitting beam is input, the Doppler image forming section discards the dummy receiving signal rather than using it for formation of the Doppler image.

Further preferably, the scanning control section controls the transmitting and receiving section such that a set of transmitting and receiving beams for formation of a luminance image is inserted at predetermined timing in each partial region which is designated. Also preferably, another dummy transmitting beams is formed after formation of the set of transmitting and receiving beams for formation of a luminance image and prior to formation of a set of transmitting and receiving beams for formation of a Doppler image. Specifically, from a viewpoint of unification of the receiving conditions, it is desirable to form a dummy transmitting beam after forming a set of transmitting and receiving beams for formation of a luminance image, and then form a set of transmitting and receiving beams for formation of a Doppler image. Here, generally, a transmitting signal for formation of a luminance image and a transmitting signal for formation of a Doppler image have different powers and different bandwidths. Specifically, the former has a wider bandwidth and a greater power than the latter.

In conventional ultrasound diagnostic apparatuses, when a set of transmitting and receiving beams for formation of a Doppler image is formed immediately after formation of a set of transmitting and receiving beams for formation of a luminance image, a receiving signal obtained by formation of the set of transmitting and receiving beams for Doppler image formation is discarded in order to avoid influences of residual echo. With the above-described structure of the present invention, however, the dummy transmitting beam is inserted between these sets of beams, thereby eliminating the need for discarding such a receiving signal. Here, the problem caused in the course of turning of the partial scan operation as described above can also be solved even by simply adding a dummy transmitting beam at a predetermined position with regard to the existing transmission and reception sequence.

It is possible to perform switching control such that a dummy transmitting beam is formed when the number of receiving beams forming a partial region is greater than a predetermined number or when the size of the partial region is larger than a predetermined size, whereas a dummy transmitting beam is not formed when the number of receiving beams forming a partial region is less than a predetermined number or when the size of the partial region is smaller than a predetermined size.

### BRIEF DESCRIPTION OF THE DRAWINGS

Preferred embodiments of the present invention will be described in detail based on the following figures, wherein:
Fig. 1 is a block diagram showing an embodiment of an ultrasound diagnostic apparatus according to the present invention;
Fig. 2 is view for explaining a problem which arises in the top line of each partial region in the related art;
Fig. 3 is a view showing an example transmission and reception sequence according to the embodiment of the present invention;
Fig. 4 is a view showing another example transmission and reception sequence according to the embodiment of the present invention; and
Fig. 5 is a view showing a transmission and reception sequence as a comparative example.

### DETAILED DESCRIPTION OF PREFERRED EMBODIMENTS

Preferred embodiments of the present invention will be described in detail with reference to the accompanying drawings.

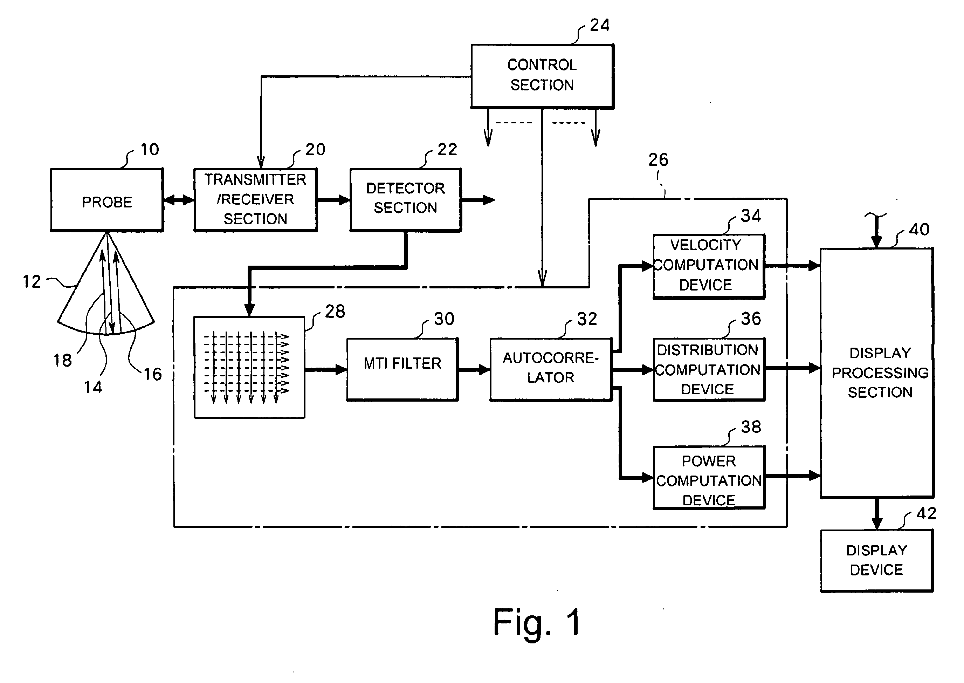

Fig. 1 shows an overall structure of an ultrasound diagnostic apparatus. This ultrasound diagnostic apparatus obtains Doppler information regarding blood flow within a living body and forms a two-dimensional image of the blood flow based on the Doppler information. It is also possible to form a tissue image representing a movement of a tissue such as a cardiac wall, in place of the image of blood flow. The transmission and reception sequence as will be described below is set in order to form an image of blood flow moving at a low velocity.

A probe 10 is brought into contact with a surface of a living body or is inserted into a body cavity of the living body. The probe 10 includes an array transducer (not shown) which is formed by a plurality of transducer elements. The array transducer generates ultrasound beams, which are electronically scanned. Electronic linear scanning, electronic sector scanning, and so on, are known as electronic scanning methods. It is also possible to perform two-dimensional beam scanning using a 2D array transducer. Fig. 1 conceptually shows electronic sector scanning. More specifically, a scan plane having a sector shape is formed by scanning the ultrasound beam. The ultrasound beam corresponds to a beam formed by synthesizing a transmitting beam and a receiving beam. In the present embodiment, two receiving beams are simultaneously formed for one transmitting beam. Namely, so-called parallel reception is performed. It is also possible to form three or more receiving beams for one transmitting beam. Referring to Fig. 1, the transmitting beam is indicated by numeral 14 and the receiving beams are indicated by numerals 16 and 18. The transmitting beam 14 and the receiving beams 16 and 18 form a set of transmitting and receiving beams, and this set of transmitting and receiving beams is electronically scanned on the scan plane 12. More specifically, in accordance with the transmission and reception sequence which will be described below, a plurality of partial regions (blocks) are set within a scan region in which Doppler information is measured, and electronic scanning (partial scanning) of the set of transmitting and receiving beams is performed in a repetitive manner within each block.

A transmitter/receiver section (transceiver section) 20 functions as a transmitting beam former and a receiving beam former. Specifically, the transmitter/receiver section 20 supplies a plurality of transmitting signals to a plurality of transducer elements in parallel, thereby forming the transmitting beam 14. The transmitter/receiver section 20 then performs a phase alignment and summation process with respect to a plurality of receiving signals output from the plurality of transducer elements, thereby electronically forming the receiving beam. The two receiving beams 16 and 18 are formed simultaneously by switching two phase alignment and summation conditions or by simultaneously applying the two phase alignment and summation conditions. Two receiving signals having been subjected to the phase alignment and summation process, corresponding to these two receiving beams 16 and 18, are output from the transmitter/receiver section 20.

A detector section 22, in the example structure shown in Fig. 1, is formed by a complex signal converter or an orthogonal detector, and orthogonally detects each receiving signal which is input, thereby converting the signal into a complex signal. The receiving signal which is converted into a complex signal is output to a Doppler information processing section 26. On the other hand, the receiving signal which is converted into a complex signal is also output to a B-mode image forming circuit (not shown). The receiving signal which is output from the transmitter/receiver section 20, rather than the complex signal from the detector section 22, may be supplied to the B-mode image forming circuit. As will be described below, a color two-dimensional image of blood flow formed by processing the Doppler information and a B-mode image which is a monochrome tomographic image of a tissue are synthesized to thereby form a color flow mapping image, which is then displayed on a display device 42 which will be described below.

The Doppler information processing section 26 will be described. The receiving signal which is now converted into a complex signal and output from the detector section 22 is stored in a memory 28. The memory 28 is used for buffering a plurality of beam data items (receiving signals) obtained at a plurality of receiving beam addresses, for each partial region, i.e. for each block, which will be described below. The plurality of beam data items stored in the memory 28 are reconfigured into a plurality of data sequences corresponding to a plurality of depths. The data sequences are then output from the memory 28 to an MTI (moving target indicator) filter 30 provided after the memory 28. Here, it is also possible to output each beam data item from the memory 28 as it is, i.e. without performing conversion into the data sequences in the memory 28 as described above, to the MTI filter 30 and an auto correlator 32 where an auto correlation operation is performed among a plurality of data items having the same depths.

The MTI filter 30 functions as a filter for removing Doppler information obtained from a still object or a low velocity moving object (e.g. a cardiac wall) within a living body. Namely, the MTI filter 30 functions as a so-called wall motion filter, and removes an unwanted clutter component contained in the receiving signal. The receiving signal output from the MTI filter 30 is output to the auto correlator 32. The auto correlator 32 repeats auto correlation operations among data items of the same depth, and outputs the averaged auto correlation result for each sample point. The auto correlation result is output to a velocity computation device 34, a distribution computation device 36, and a power computation device 38. The velocity computation device 34 is a circuit which computes a velocity of the blood flow based on the auto correlation result, the distribution computation device 36 is a circuit which computes distribution of the velocity based on the auto correlation result, and the power computation device 38 is a circuit which computes the power based on the auto correlation result.

While the structure of the Doppler information section 26 may be known, according to the present embodiment, the Doppler information processing section 26 operates in accordance with a specific transmission and reception sequence as will be described in detail below. The velocity information output from the velocity computation device 34, the distribution information output from the distribution computation device 36, and the power information output from the power computation device 38 are all supplied to a display processing section 40.

The display processing section 40 has functions including a coordinate conversion function, an interpolation processing function, an image synthesizing function, and the like. Specifically, the display processing section 40 includes DSCs (digital scan converters) provided corresponding to the respective operation devices 34, 36, and 38, for forming a two-dimensional velocity image, a two-dimensional distribution image, and a two-dimensional power image. Here, formation of a necessary image is performed in accordance with the display mode which is selected. Information which is used for forming a luminance image of a tissue is also input to the display processing section 40, and the display processing section 40 forms a B mode image by means of coordinate conversion with regard to such information.

When a color Doppler mode is selected, for example, the display processing section 40 synthesizes a two-dimensional color image of a blood flow and a two-dimensional monochrome image of a tissue and outputs information of the resulting color flow mapping image to the display device 42. When a power mode is selected, the display processing section 40 synthesizes a two-dimensional color power image and a two-dimensional monochrome tissue image to form a synthesized image, and outputs information of the synthesized image to the display device 42. As required, the distribution information may be simultaneously represented on the color flow mapping image. A control section 24 controls an operation of the transmitter/receiver section 20, the Doppler information processing section 26, and so on, so as to achieve the transmission and reception sequence as will be described below. An operation panel which is not shown is connected to the control section 24, and the user can perform user input through this operation panel.

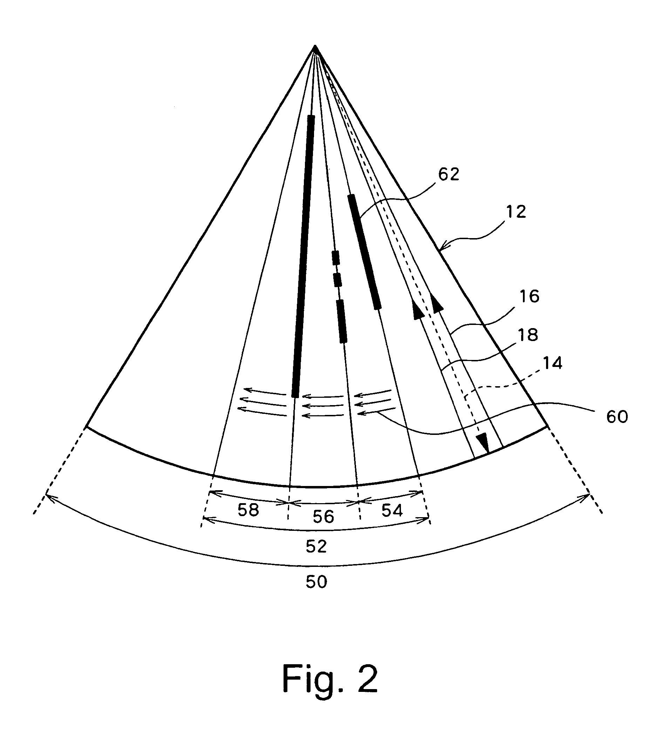

The transmission and reception sequence according to the present embodiment will be described with reference to Figs. 2 to 4. The transmission and reception sequence and the transmitting and receiving conditions are set by the control section 24. Fig. 2 shows a scan plane 12. As described above, with regard to a single transmitting beam 14, two receiving beams 16 and 18 are formed simultaneously adjacent to the transmitting beam 14. A set of these transmitting and receiving beams is electronically scanned on the scan plane 12. More specifically, a scan region 52 in which Doppler information is to be measured by a user is designated in the overall range 50 of the scan plane 12. Here, the scan region 52 may be a whole region of the scan plane 12 or may be a portion of the scan plane 12. If a portion of the scan plane 12 is set to the scan region 52, only ultrasound transmission and reception for forming a B-mode image is performed in the region other than the scan region 52, whereas in the scan region 52, both ultrasound transmission and reception for forming a B-mode image and ultrasound transmission and reception for forming a Doppler image is performed.

In the present embodiment, the scan region 52 is divided into a plurality of partial regions (blocks) 54, 56, and 58. Here, the number of blocks can be appropriately set by a user or automatically. In Fig. 2, three partial regions 54, 56, and 58 are set, although the number of partial regions is not limited to three.

As is known, in order to perform an auto correlation operation with high precision, it is necessary to obtain a great number of beam data items for each one receiving beam address. For example, eight or ten beam data items must be obtained. In a general transmission and reception sequence of the related art, each receiving beam address is sequentially designated and transmission and reception of ultrasound is performed a plurality of times successively for each designated receiving beam address, thereby successively obtaining a plurality of beam data items for each beam address. According to the transmission and reception sequence of the present embodiment, on the other hand, in each of the partial regions 54, 56, and 58, a partial scan operation from one end to the other end is performed in a repetitive manner. For example, such partial scanning is performed eight or ten times for each of the partial regions 54, 56, and 58, as indicated by arrows 60. As a result of the partial scan operation performed in a repetitive manner as descried above, it is possible to obtain eight or ten beam data items for each receiving beam address within each of the partial regions 54, 56, and 58. In this case, with regard to each receiving beam address, the repetition period of a transmitting pulse can be extended, so that lower velocity Doppler information can be measured with high precision, as opposed to the related art technologies as described above in References 1 to 3. In this case, the advantage of maintaining the frame rate can also be achieved.

When such a partial scan operation is merely performed in a repetitive manner, however, at the turning point for shifting from the i-th (here, i = 1, 2, 3 ...) partial scan operation to the (i+1)th partial scan operation, a distance between two sets of transmitting and receiving beams adjacent to each other with respect to time is spatially apart, which causes a problem that the receiving conditions become discontinuous before and after the turning point. Here, assuming that the number of partial scan operations performed for one partial region is N, i is an integer number which is 1 or greater and N-1 or smaller. In each partial scan operation, each set of transmitting and receiving beams other than the first set of transmitting and receiving beams is affected by the adjacent set of transmitting and receiving beams formed immediately before, i.e. affected by the ultrasound transmitted in the vicinity. On the contrary, the top or first set of transmitting and receiving beams in the second or subsequent partial scan operations, which is further away from the set of transmitting and receiving beams formed immediately before, is not significantly affected by the set of beams formed immediately before. As such, the receiving conditions differ between a top (first) set of transmitting and receiving beams and the remaining sets of transmitting and receiving beams.

From a different point of view, with regard to the sets of transmitting and receiving beams which are spatially adjacent to each other, even if the multiple reflection and noises resulting from the formation of a transmitting beam in the preceding set of transmitting and receiving beams affect receiving beams in the subsequent set of transmitting and receiving beams, such influence is not very noticeable on the image. With regard to the sets of transmitting and receiving beams which are spatially distant from each other, on the other hand, the above influences may be noticeable on the image. For example, the top receiving line in each partial region either appears to be missing or noticeable noise appears in that line, thereby lowering the quality of the Doppler image. This is indicated by numeral 62 in Fig. 2. More specifically, there is a problem that, at the top line in each of the partial regions 54, 56, and 58, the multiple reflection caused by the last transmission of ultrasound in the preceding partial scan operation or the strongly reflected waves from the deep site caused by the above-described last ultrasound transmission is imaged on that line.

According to the present embodiment, in order to overcome or reduce the above problem of discontinuity of the receiving conditions, a dummy transmitting beam (or more specifically, a set of dummy transmitting and receiving beams including the dummy transmitting beam) is formed prior to formation of the top set of transmitting and receiving beams. This will be described with reference to Figs. 3 and 4.

In the upper portion of Fig. 3, the receiving beam numbers (receiving beam address numbers) and the transmitting beam numbers (transmitting beam address numbers) are shown along the horizontal direction. Further, in the lower portion of Fig. 3, the overall scan range is indicated by numeral 200, and the scan region in which Doppler information is measured is indicated by numeral 202. Also, the regions for which only transmission and reception of ultrasound for forming a B-mode image is performed are indicated by numerals 204 and 206. In the example shown in Fig. 3, the scan region 202 is divided into to partial regions 208 and 210. As described above, a partial scan operation is performed in a repetitive manner in each of the partial regions 208 and 210. In Fig. 3, each dotted line represents a transmitting beam and two solid lines provided on either side of each transmitting beam represent two receiving beams which are formed simultaneously. Further, the vertical axis represents time t, showing that the transmission and reception sequence is progressing in the downward direction.

Referring to Fig. 3, three squares arranged in the horizontal direction represent B-mode transmission/reception, with the middle square representing transmission and the squares on both sides representing reception. Three white circles arranged in the horizontal direction represent normal Doppler transmission/reception, with the middle white circle representing transmission and the white circles on both sides representing reception. Further, three circles including the middle white circle and two black circles on both sides represent dummy Doppler transmission/reception, with the middle white circuit representing effective transmission and black circles on both sides representing ineffective reception. Specifically, in the dummy Doppler transmission/reception, while a transmitting beam is actually formed in a manner similar to the normal Doppler transmission/reception and two receiving beams are actually formed at the time of reception, two receiving signals corresponding to the two receiving beams themselves are not used for Doppler image formation and are discarded. Naturally, formation of the two receiving beams may be omitted. What is significant is to reduce discontinuity of the receiving conditions by forming a dummy transmitting beam at an appropriate time.

Further, Tr represents a repetition period of a transmitting pulse, and fr represents a repetition frequency of a transmitting pulse. Also, Td represents a transmission and reception repetition period on the same beam, and fd represents a repetition frequency of transmission/reception on the same beam. Td represents the period of partial scan concerning a partial region.

In the transmission and reception sequence shown in Fig. 3, the partial scan operation for obtaining Doppler information is performed five times in the time axis direction for each of the partial regions 208 and 210. Numeral 100 indicates one partial scan operation. With the partial scan operations repeated five times, ultrasound transmission and reception is repeated five times for one set of transmitting and receiving beam addresses. Namely, five beam data items (sets of beam item) can be obtained per each one receiving beam. Here, when predetermined times of the partial scan operations are completed for each of the partial regions 208 and 210, then a partial scan operation for forming a B-mode image is performed only once. One set of transmitting and receiving beams in such a partial scan operation for B-mode image formation is indicated by numeral 108.

In the present embodiment, as shown in the example shown in Fig. 3, a set of dummy transmitting and receiving beams is formed prior to formation of the first set of transmitting and receiving beams in each partial scan operation. Such a set of dummy transmitting and receiving beams is represented by numeral 102 or 105. The above-described problem of discontinuity of the receiving conditions arises if a first set of transmitting and receiving beams 107 in the second partial scan operation is formed immediately after formation of the last set of transmitting and receiving beams 103 in the first partial scan operation, for example. In the present embodiment, a set of dummy transmitting and receiving beams 105 is formed between these sets of transmitting and receiving beams 103 and 107, i.e. dummy transmission of ultrasound is performed prior to the receiving period of the set of' transmitting and receiving beams 107, so that the problem of discontinuous receiving conditions can be eliminated or reduced. A partial scan operation to which such a set of dummy transmitting and receiving beams is added is indicated by numeral 104.

Here, with regard to the top set of transmitting and receiving beams 101 in the first partial scan operation, no problem of discontinuity at the turning point of the partial scan operation occurs. Accordingly, in consideration of only this point, it is not necessary to provide a first set of dummy transmitting and receiving beams 102. However, there may be a case where a set of transmitting and receiving beams for forming a B-mode image is formed immediately before the first partial scan operation and residual echo is generated by an influence of such a beam set. Accordingly, in the present embodiment, the first set of dummy transmitting and receiving beams 102 is formed in order to prevent such an influence and to unify the receiving conditions. In addition, with control in this manner, a common sub-sequence can be used among a plurality of partial scan operations within each of the partial regions 208 and 210, as a result of which an advantage of simplified control can be achieved. Here, while in the example shown in Fig. 3, the set of transmitting and receiving beams for B-mode image formation is sequentially formed in the order of beam addresses, in the actual image formation, the set of transmitting and receiving beams for B-mode image formation can be formed in various orders and at various positions, or an M-mode may be selected simultaneously with the B-mode. In consideration of these possibilities, it is desirable to form the set of dummy transmitting and receiving beams 102 immediately before the top set of transmitting and receiving beams 101. This is similarly true to the set of dummy transmitting and receiving beams which is formed at the time point t=32. As described above, the set of dummy transmitting and receiving beams is basically formed at the beginning of each partial scan operation. However, formation of the set of dummy transmitting and receiving beams may be partially omitted.

The dummy transmitting beam is desirably formed at a position adjacent to the position of the set of transmitting and receiving beams which will be formed immediately after. This condition is satisfied in the transmission and reception sequence shown in Fig. 3. More specifically, a dummy transmitting beam is formed at the position of the transmitting beam No. 2 immediately before the set of transmitting and receiving beams in which the transmitting beam number is defined as No. 3 and the receiving beam numbers are defined as Nos. 5 and 6, for example. Namely, these two transmitting beams are adjacent to each other. Alternatively, a dummy transmitting beam can also be formed on the same beam address as that of the set of transmitting and receiving beams to be formed immediately after, as shown in Fig. 4, rather than forming the dummy transmitting beam at the adjacent position.

Referring to Fig. 4, structures similar to those shown in Fig. 3 are designated by the same numerals and will not be described again. In the transmission and reception sequence shown in Fig. 4, similar to the transmission and reception sequence in Fig. 3, a partial scan operation is repeated for each of the partial regions 208 and 210. Immediately before the set of transmitting and receiving beams 101, 107 at the top of each partial scan operation, a set of dummy transmitting and receiving beams 102A, 105A is formed on the same transmitting and receiving beam address as that of the set of transmitting and receiving beams to be formed immediately after. With this structure, similar to the structure in Fig. 3, the immediately preceding transmission beam is purposely caused to affect the top set of transmitting and receiving beams in each partial scan operation, so that discontinuity of the receiving conditions can be reduced. Further, if the set of dummy transmitting and receiving beams is formed after formation of the set of transmitting and receiving beams for B-mode image formation, each of the advantages described above can be obtained.

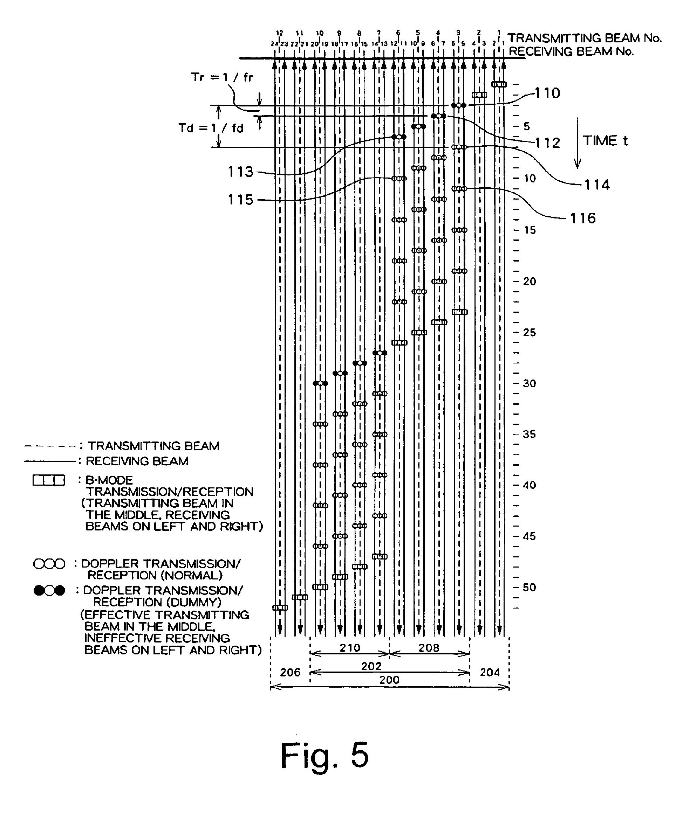

Fig. 5 shows a comparative example. In Fig. 5, structures similar to those shown in Fig. 3 are designated by the same numerals and will not be described again. In this comparative example, similar to the transmission and reception sequence in Fig. 3, a partial scan operation is repeated for each of the partial regions 208 and 210. In the first partial scan operation, only sets of dummy transmitting and receiving beams are formed. This is because the set of dummy transmitting and receiving beams 110 at the top in the partial scan operation prevents the influence of the set of transmitting and receiving beams for B-mode image formation which has been set immediately before. For this purpose, a blank period may be set in place of the period in which the set of dummy transmitting and receiving beams 110 is formed. Further, while the plurality of beam sets from the second set of dummy transmitting and receiving beams 112 to the fourth (i.e. the end) set of dummy transmitting and receiving beams 113 may be sets of normal transmitting and receiving beams under normal circumstances, in the present example, sets of dummy transmitting and receiving beams are purposely formed in order to unify the number of beam data times for each receiving beam. This is also effective in simplifying the sub-sequence within each of the partial regions 208 and 210 to the greatest extent possible. Consequently, according to the transmission and reception sequence shown in Fig. 5, the number of beam data items which can be obtained from one receiving beam is four, which is less than that in both structures shown in Figs. 3 and 4.

In this comparative example, when attention is focused on the relationship between the last set of transmitting and receiving beams 115 in the first partial scan operation performed for obtaining Doppler information and the first set of transmitting and receiving beams 116 in the following partial scan operation, the receiving conditions in the set of transmitting and receiving beams 116 become discontinuous as described above. As a result, the problem which is indicated in Fig. 2 by numeral 62 arises. Specifically, while the sets of dummy transmitting and receiving beams 110 to 113 are formally used in the comparative example, these sets of dummy beams cannot solve the problem which arises among a plurality of partial scan operations performed for forming a Doppler image. In the transmission and reception sequence of the comparative example shown in Fig. 5, however, by inserting sets of dummy transmitting and receiving beams as shown in Fig. 3 or 4 immediately before the top set of the transmitting and receiving beams 114, 116 in each partial scan operation, the problem of discontinuity as described above can be overcome. The present invention includes such a comparative example.

In the embodiments shown in Figs. 3 and 4, because the dummy transmission and reception is performed once in each partial scan operation, the frame rate is reduced accordingly. However, this disadvantage can be improved by adjusting the diagnostic depth or adjusting the number of beams. In the described examples of the present embodiment, because so-called parallel reception is adopted, the advantage that the frame rate can be made several times greater can be obtained while simultaneously obtaining all of the advantages described in the References 1 to 3, thereby substantially eliminating the problem of reduction in the frame rate caused by performance of dummy transmission and reception. Further, while in the embodiment as shown in Figs. 3 and 4, each partial scan operation is performed in the forward direction in the order of the beam address, operational effects similar to those described above can also be achieved even when each partial scan operation is performed in the reverse direction. More specifically, even in such a case, a dummy transmitting beam can be similarly formed at the transmitting beam address adjacent to the top transmitting beam address. The partial scan operation performed in the forward direction as in the present embodiment is advantageous in that a shift of time phase for each local site can be minimized and that control can be simplified.

## Claims

1. An ultrasound diagnostic apparatus comprising:
a transmitter/receiver section (20) for forming a set of transmitting and receiving beams in a repetitive manner within a scan region (52; 202) in which Doppler information is measured, to obtain a plurality of receiving signals for each receiving beam address;
a scanning control section (24) for controlling repetitive formation of the set of transmitting (14) and receiving beams (16, 18); and
a Doppler image forming section for forming a Doppler image representing movement information of a blood flow or a tissue existing within the scan region based on the plurality of receiving signals (16, 18) obtained for each receiving beam address,
wherein
the scanning control section (24) sets a plurality of partial regions (54, 56, 58; 210, 208) within the scan region (52; 202), sequentially designates a partial region (54, 56, 58; 210, 208) among the plurality of partial regions (54, 56, 58; 210, 208), and controls the transmitter/receiver section (20) such that a partial scan operation is performed a plurality of times in a repetitive manner within the partial region (54, 56, 58; 210, 208) which is designated, and
in the repetitive partial scan operation to be performed a plurality of times, at a turning point from the i-th (i=1,2,3,...) partial scan operation to the (i+1)th partial scan operation, a dummy transmitting beam is formed so as to reduce discontinuity of receiving conditions caused by the turning of the partial scan operation, after a last set of transmitting and receiving beams in the i-th partial scan operation is formed and before a first set of transmitting and receiving beams in the (i+1)th partial scan operation is formed and
when a dummy receiving signal corresponding to the dummy transmitting beam is input, the Doppler image forming section does not use the dummy receiving signal for formation of the Doppler image and discards the dummy receiving signal.

2. An apparatus according to claim 1, wherein
the set of transmitting (14) and receiving (16, 18) beams is composed of one transmitting beam and a plurality of receiving beams.

3. An apparatus according to claim 1, wherein
the dummy transmitting beam is formed at a predetermined position based on a position of the first set of transmitting (14) and receiving (16, 18) beams in the (i+1)th partial scan operation.

4. An apparatus according to claim 3, wherein
the predetermined position is adjacent to a position of a transmitting beam (14) included in the first set of transmitting (14) and receiving (16, 18) beams in the (i+1)th partial scan operation.

5. An apparatus according to claim 3, wherein
the predetermined position is the same as a position of a transmitting (14) beam included in the first set of transmitting (14) and receiving (16, 18) beams in the (i+1)th partial scan operation.

6. An apparatus according to claim 1, wherein
the scanning control section (24) controls the transmitter/receiver section (20) such that a set of transmitting (14) and receiving (16, 18) beams for formation of a luminance image is inserted at predetermined timing in each partial region which is designated.

7. An apparatus according to claim 6, wherein
another dummy transmitting beam is formed after formation of the set of transmitting (14) and receiving (16, 18) beams for formation of a luminance image and prior to formation of the set of transmitting (14) and receiving (16, 18) beams for forming a Doppler image.

8. An apparatus according to claim 1, wherein
the dummy transmitting beam is formed in a repetitive manner outside or inside of each of the partial regions.

9. An apparatus according to claim 1, wherein
a plurality of dummy receiving beams are formed along with the dummy transmitting beam.

10. An apparatus according to claim 1, wherein
the direction of each partial scan operation is the same as the direction in which the plurality of partial regions are sequentially designated.

11. An apparatus according to claim 1, wherein
the direction of each partial scan operation is opposite to the direction in which the plurality of partial regions are sequentially designated.

## Patentansprüche

1. Diagnostisches Ultraschallgerät mit:
einem Sender-/Empfängerabschnitt (20) zum Bilden eines Satzes von Sende- und Empfangsstrahlen auf eine sich wiederholende Weise innerhalb eines Abtastbereiches (52; 202) in dem eine Dopplerinformation gemessen wird, um eine Mehrzahl von Empfangssignalen für jede Empfangsstrahladresse zu erhalten;
einem Abtaststeuerabschnitt (24) zum Steuern der sich wiederholenden Bildung des Satzes von Sende- (14) und Empfangsstrahlen (16, 18); und
einem Dopplerbilderzeugungsabschnitt zum Ausbilden eines Dopplerbildes, das eine Bewegungsinformation eines Blutflusses oder eines Gewebes, die innerhalb des Abtastbereiches vorliegen, basierend auf der Mehrzahl von Empfangssignalen (16, 18), die für jede Empfangsstrahladresse erhalten werden, darstellt,
wobei
der Abtaststeuerabschnitt (24) eine Mehrzahl von Teilbereichen (54, 56, 58; 210, 208) innerhalb des Abtastbereiches (52; 202) definiert, sequentiell einen Teilbereich (54, 56, 58; 210, 208) aus der Mehrzahl von Teilbereichen (54, 56, 58; 210, 208) bestimmt, und den Sender-/Empfängerabschnitt (20) so steuert, dass ein teilweiser Abtastvorgang mehrmals auf eine sich wiederholende Weise innerhalb des Teilbereiches (54, 56, 58; 210, 208), der bestimmt ist, durchgeführt wird, und in dem sich wiederholenden teilweisen Abtastvorgang, der mehrmals durchgeführt wird, an einem Umkehrpunkt von dem i-ten (i=1,2,3,...) teilweisen Abtastvorgang zu dem (i+1)-ten teilweise Abtastvorgang ein Blindsendestrahl erzeugt wird, um Unstetigkeiten der Empfangsbedingungen zu verringern, die durch den Wechsel des teilweisen Abtastvorgangs bewirkt sind, nachdem ein letzter Satz von Sende- und Empfangsstrahlen in dem i-ten teilweisen Abtastvorgang gebildet ist und bevor ein erster Satz von Sende- und Empfangsstrahlen in dem (i+1)-ten teilweisen Abtastvorgang gebildet ist, und
wenn ein Blindempfangssignal entsprechend dem Blindsendestrahl eingegeben ist, der Dopplerbilderzeugungsabschnitt das Blindempfangssignal nicht zum Erzeugen des Dopplerbildes verwendet und das Blindempfangssignal verwirft.

2. Gerät nach Anspruch 1, wobei
der Satz von Sende- (14) und Empfangsstrahlen (16, 18) aus einem Sendestrahl und einer Mehrzahl von Empfangsstrahlen zusammengesetzt ist.

3. Gerät nach Anspruch 1, wobei
der Blindsendestrahl an einer vorbestimmten Position basierend auf einer Position des ersten Satzes von Sende- (14) und Empfangsstrahlen (16, 18) im (i+1)-ten teilweisen Abtastvorgang gebildet ist.

4. Gerät nach Anspruch 3, wobei
die vorbestimmte Position benachbart ist zu einer Position eines Sendestrahls (14), der in dem ersten Satz von Sende- (14) und Empfangsstrahlen (16, 18) in dem (i+1)-ten teilweisen Abtastvorgang enthalten ist.

5. Gerät nach Anspruch 3, wobei
die vorbestimmte Position die gleiche ist wie eine Position eines Sendestrahls (14), der in dem ersten Satz von Sende- (14) und Empfangsstrahlen (16, 18) in dem (i+1)-ten teilweisen Abtastvorgang enthalten ist.

6. Gerät nach Anspruch 1, wobei
der Abtaststeuerabschnitt (24) den Sender-/Empfängerabschnitt (20) so steuert, dass ein Satz von Sende- (14) und Empfangsstrahlen (16, 18) zum Erzeugen eines Lumineszenzbildes bei einer vorbestimmten Zeitvorgabe in jeden Teilbereich, der bestimmt ist, eingesetzt ist.

7. Gerät nach Anspruch 6, wobei
ein anderer Blindsendestrahl nach der Bildung des Satzes von Sende- (14) und Empfangsstrahlen (16, 18) zum Erzeugen eines Lumineszenzbildes und vor der Bildung des Satzes von Sende- (14) und Empfangsstrahlen (16, 18) zum Erzeugen eines Dopplerbildes erzeugt ist.

8. Gerät nach Anspruch 1, wobei
der Blindsendestrahl auf eine sich wiederholende Weise außerhalb oder innerhalb jedes Teilbereiches erzeugt ist.

9. Gerät nach Anspruch 1, wobei
eine Mehrzahl von Blindempfangsstrahlen zusammen mit dem Blindsendestrahl erzeugt sind.

10. Gerät nach Anspruch 1, wobei
die Richtung jedes teilweisen Abtastvorgangs die gleiche ist, wie die Richtung in der die Mehrzahl der Teilbereiche nacheinander bestimmt ist.

11. Gerät nach Anspruch 1, wobei
die Richtung jedes teilweisen Abtastvorgangs der Richtung in der die Mehrzahl der Teilbereiche nacheinander bestimmt ist, gegenüberliegt.

## Revendications

1. Appareil de diagnostic par ultrasons comportant
- une section d'émission/réception (20) pour former un jeu de faisceaux de transmission et de réception de façon répétitive dans une région de balayage (52 ; 202) dans laquelle on mesure une information Doppler pour obtenir un ensemble de signaux de réception pour chaque adresse de faisceaux de réception,
- une section de commande de balayage (24) pour commander la formation répétitive du jeu de faisceaux de transmission (14) et de réception (16, 18), et
- une section de formation d'image Doppler pour former une image Doppler représentant l'information de mouvement d'un flux sanguin ou d'un tissu existant dans la région balayée en fonction de l'ensemble des signaux de réception (16, 18) obteni pour chaque adresse de faisceaux,
appareil dans lequel
- la section de commande de balayage (24) fixe un ensemble de régions partielles (54, 56, 58 ; 210, 208) dans la région de balayage (52 ; 202), désigne séquentiellement une région partielle (54, 56, 58 ; 210, 208) parmi l'ensemble des régions partielles (54, 56, 58 ; 210, 208) et commande la section émission/réception (20) de façon à effectuer plusieurs fois une opération de balayage partiel, de façon répétitive dans la région partielle (54, 56, 58 ; 210, 208) désignée, et
- dans l'opération répétitive de balayage partiel à executer, plusieurs fois, au cours d'un ensemble de fois, à un point de retour à partir de l'opération de balayage partiel d'ordre i (i = 1, 2, 3, ...), à l'opération de balayage pastiel d'ordre (i+1) on forme un faisceau de transmission factice de façon à réduire la discontinuité des conditions de réception engendrées par la retour de l'opération de balayage partiel, après qu'un dernier jeu de faisceaux de transmission et de réception au cours de l'opération de balayage partiel d'ordre (i) soit formé et avant qu'un premier jeu de faisceaux de transmission et de réception soit formé au cours de l'opération de balayage partiel d'ordre (i + 1), et
- lorsqu'un signal de réception factice correspondant au faisceau de transmission factice est appliqué à l'entrée, la section de formation d'image Doppler n'utilise pas le signal de réception factice pour former l'image Doppler et écaste le signal de réception factice.

2. Appareil selon la revendication 1,
dans lequel
l'ensemble des faisceaux de transmission (14) et de réception (16, 18) est composé d'un faisceau de transmission et d'un ensemble de faisceaux de réception.

3. Appareil selon la revendication 1,
dans lequel
le faisceau de transmission factice est formé dans une position prédéterminée fondée sur une position du premier jeu de faisceaux de transmission (14) et de faisceaux de réception (16, 18) au cours de l'opération de balayage partiel d'ordre (i + 1).

4. Appareil selon la revendication 3,
dans lequel
la position prédéterminée est adjacente à une position d'un faisceau de transmission (14) contenu dans le premier jeu de faisceaux de transmission (14) et de faisceaux de réception (16, 18) pour l'opération de balayage partiel d'ordre (i + 1).

5. Appareil selon la revendication 3,
dans lequel
la position prédéterminée est la même qu'une position d'un faisceau de transmission (14) contenu dans le premier jeu de faisceaux de transmission (14) et de faisceaux de réception (16, 18) pour l'opération de balayage partiel d'ordre (i + 1).

6. Appareil selon la revendication 1,
dans lequel
la section de commande de balayage (24) commande la section de d'émission/réception (20) de façon qu'un jeu de faisceaux de transmission (14) et de faisceaux de réception (16, 18) pour former une image de luminance soit inséré à un instant prédéterminé dans chaque région partielle désignée.

7. Appareil selon la revendication 6,
dans lequel
un autre faisceau de transmission factice est formé après la formation du jeu de faisceaux de transmission (14) et de faisceaux de réception (16, 18) pour former une image de luminance et avant de former le jeu de faisceaux de transmission (14) et de faisceaux de réception (16, 18) pour former une image Doppler.

8. Appareil selon la revendication 1,
dans lequel
le faisceau de transmission factice est formé de manière répétitive à l'extérieur ou à l'intérieur de chacune des régions partielles.

9. Appareil selon la revendication 1,
dans lequel
on forme un ensemble de faisceaux de réception factice le long du faisceau de transmission factice.

10. Appareil selon la revendication 1,
dans lequel
la direction de chaque opération de balayage partiel est la même que la direction dans laquelle l'ensemble des régions partielles est désigné séquentiellement.

11. Appareil selon la revendication 1, dans lequel
la direction de chaque opération de balayage partiel est opposée à la direction dans laquelle l'ensemble des régions partielles est désigné séquentiellement.
